# EUROPÄISCHE PATENTSCHRIFT

(11) **EP 1 029 321 B1**
(45) Veröffentlichungstag und Bekanntmachung des Hinweises auf die Patenterteilung: **10.10.2001**
(21) Anmeldenummer: 98965074.2
(22) Anmeldetag: 16.11.1998
(51) Int. Cl.: G06F 3/147, H02J 17/00, H04B 11/00, G09G 1/00

(54) **ANZEIGEELEMENT, STEUERUNG FÜR EIN ANZEIGEELEMENT, ENTSPRECHENDES STEUERVERFAHREN SOWIE REGISTERELEMENT UND REGISTRIERSYSTEM**
DISPLAY ELEMENT, CONTROL FOR A DISPLAY ELEMENT, CORRESPONDING CONTROL METHOD IN ADDITION TO A REGISTER ELEMENT AND REGISTERING SYSTEM
ELEMENT D'AFFICHAGE, COMMANDE POUR ELEMENT D'AFFICHAGE, PROCEDE DE COMMANDE CORRESPONDANT, ELEMENT REGISTRE ET SYSTEME D'ENREGISTREMENT

(30) Priorität: 14.11.1997 DE 19750530
(43) Veröffentlichungstag der Anmeldung: 23.08.2000
(73) Patentinhaber: Operativ 5 AG, 90402 Nürnberg (DE)
(72) Erfinder: Operativ 5 AG, 90402 Nürnberg (DE)
(74) Vertreter: Castell, Klaus, Dr.-Ing.
(86) Internationale Anmeldenummer: DE9803358
(87) Internationale Veröffentlichungsnummer: WO9926221

(56) Entgegenhaltungen:
- EP-A- 0 337 283
- EP-A- 0 631 226
- WO-A-95/22138
- DE-A- 3 340 469
- US-A- 4 654 514
- US-A- 5 300 875

## Beschreibung

Die Erfindung betritt ein Anzeigeelement, eine Steuerung für ein Anzeigeelement und ein entsprechendes Steuerverfahren sowie ein Registerelement und ein Registriersystem.

Im einzelnen betrifft die Erfindung ein Anzeigeelement mit einer Energiequelle, mit einer Anzeige und mit einem Prozessor/Speicher, wobei die Energiequelle, die Anzeige und den Prozessor/Speicher mit Energie versorgen und der Prozessor/Speicher über die Anzeige Daten anzeigen kann. Darüber hinaus betrifft die Erfindung eine Steuerung für ein oder mehrere Anzeigeelemente mit einer Recheneinheit mit Mitteln zur Verwaltung und Eingabe von anzuzeigenden Werten sowie ein entsprechendes Steuerverfahren. Derartige Anzeigeelemente, Steuerungen bzw. Steuerverfahren sind beispielsweise aus der DE 40 34 193 C2, der DE 44 03 696 A1, der DE 195 13 328 A1, der DE 195 38 115 A1 und der DE 196 48 937 A1 bekannt. Alle diese Druckschriften beschreiben Anzeigeelemente bzw. Anlagen zur Ansteuerung derartiger Anzeigeelemente, die beispielsweise in Warenhäusern zur Preisauszeichnung oder sonstigen Kennzeichnung von Waren dienen können. Hierbei besteht einerseits die Möglichkeit, sämtliche Anzeigeelemente über einen elektrisch leitenden Bus miteinander zu verbinden, wobei diese Anordnung verhältnismäßig kostenintensiv und nicht sehr variabel ist. Andererseits können die Anzeigeelemente mit ihrer Steuerung über elektromagnetische Wellen Daten austauschen. Letzteres ist jedoch verhältnismäßig störanfällig und beeinflußt insbesondere auch die Umgebung nachteilig (Elektrosmog), beispielsweise für Menschen mit Herzschrittmachern.

Darüber hinaus betrifft die Erfindung ein Registerelement zur Kennzeichnung eines Gegenstandes sowie ein System zur Registrierung eines Bestandes an Gegenständen, wie beispielsweise eines Lagers. Derartige Registerelemente sind heutzutage als Preisetiketten oder Barcodes unmittelbar an den entsprechenden Gegenständen angebracht bzw. als Lesekärtchen in unmittelbarer Nähe der Gegenstände vorgehalten. Bei einer Entnahme eines Gegenstandes aus einem Bestand bzw. bei einer Ortsveränderung des Gegenstandes wird der Gegenstand durch eine entsprechende Registratur, wie beispielsweise eine Kasse oder eine Lagerverwaltung, erfaßt und entsprechend verwaltet. Dieses kann beispielsweise durch Eingabe eines Preises in eine Kasse, durch Lesen des Barcodes oder einer entsprechenden Lochkarte sowie durch eine entsprechende Aktualisierung des Lagerbestandes in einem Rechner geschehen. Hierzu muß jedoch jeweils ein manueller Vorgang, nämlich die Eingabe eines Preises, einer Artikelnummer bzw. das Betätigen eines Barcode- bzw. Kartenlesers erfolgen. Dieses ist einerseits verhältnismäßig zeitaufwendig und personalintensiv und bedingt andererseits eine mögliche Fehlerquelle.

Darüber hinaus sind aus der EP 0 337 283 A2, der EP 0 631 226 A1, der DE 33 40 469 A1, der US 4,654,514 und der US 5,300,875 Anordnungen bekannt, bei welchen Anzeigelemente durch elektromagnetische aber auch akustische Signale Informationen zugeführt bekommen.

Es ist Aufgabe vorliegender Erfindung, gattungsgemäße Anordnungen bzw. gattungsgemäße Verfahren derart weiter zu bilden, dass eine Energiebilanz des Anzeigeelementes möglichst optimal an die herrschenden Bedingungen angepasst ist.

Als Lösung schlägt die Erfindung ein Anzeigeelement mit den Merkmalen des Anspruchs 1, eine Steuerung für ein oder mehrere Anzeigeelemente mit den Merkmalen des Anspruchs 3 sowie ein Verfahren zum Steuern von einem oder mehreren Anzeigeelementen mit den Merkmalen des Anspruchs 4 vor.

Hierzu schlägt die Erfindung einerseits ein Anzeigeelement mit einer Energiequelle, mit einer Anzeige und mit einem Prozessor/Speicher vor, bei welchem die Energiequelle die Anzeige und den Prozessor/Speicher mit Energie versorgen und der Prozessor/Speicher über die Anzeige Daten anzeigen kann und das einen Empfänger für Longitudinalwellen, der mit dem Prozessor/Speicher verbunden ist, umfasst, um empfangene Wellen als Daten dem Prozessor/Speicher zuzuführen. Dieser Empfänger kann insbesondere ein Ultraschallempfänger sein.

Es hat sich in der Praxis gezeigt, daß die Verwendung von Ultraschall bzw. von Longitudinalwellen wesentlich störungsunanfälliger ist als die Verwendung elektromagnetischer Wellen. Dieses liegt insbesondere daran, daß elektromagnetische Wellen wesentlich schwieriger in ihrer Ausbreitung kontrolliert werden können, so daß selbst in abgeschlossenen Räumen sehr viele, auch von außen kommende, Störsignale vorhanden sind. Darüber hinaus beeinflussen elektromagnetische Wellen auch andere elektrische Geräte, wie beispielsweise Mobiltelefone oder Herzschrittmacher, nachteilig.

Hingegen ermöglicht die Verwendung von Ultraschall bzw. von Longitudinalwellen eine verhältnismäßig störungssichere Kommunikation, insbesondere wenn eine ausreichend hohe Frquenz für den Ultraschall genutzt wird. Insbesondere kann die Frequenz derart hoch gewählt werden, daß sie Menschen oder Tiere nicht störend bzw. nachteilig beeinflußt.

Dem entsprechend schlägt die Erfindung eine Steuerung für ein oder mehrere Anzeigeelemente, vorzugsweise der vorbeschriebenen Art, mit einer Recheneinheit mit Mitteln zur Verwaltung und/oder Eingabe von anzuzeigenden Werten vor, welche Mittel zur Übertragung von Daten zwischen wenigstens einem Anzeigeelement und der Recheneinheit mittels Longitudinalwellen, insbesondere Ultraschall, umfasst. Durch eine derartige Steuerung können zentral, wie auch bei den einleitend beschriebenen Systemen möglich, die anzuzeigenden Werte eingegeben bzw. verwaltet werden. Über die Schnittstelle mittels Longitudinalwellen können dann entsprechende Daten an die Anzeigeelemente weitergeleitet werden.

Darüber hinaus schlägt die Erfindung ein Steuerverfahren für ein oder mehrere Anzeigeelemente mittels einer entsprechenden Steuerung vor, bei welchem zwischen wenigstens einem Anzeigelement und der Steuerung ein Datenaustausch mittels Longitudinalwellen, insbesondere Ultraschall, erfolgt.

Im vorliegenden Zusammenhang bedeutet der Begriff eines Datenaustausches, daß Daten von einer Einheit zu einer anderen Einheit übertragen werden. Hierzu muß nicht zwingend ein Datenfluß auch in entgegengesetzter Richtung erfolgen. Insbesondere spielt auch die Richtung des Datenflusses keine Rolle und es ist auch denkbar, daß dieser in beide Richtungen erfolgt.

Um letzteres zu ermöglichen kann ein erfindungsgemäßes Anzeigeelement mindestens einen Sender für Longitudinalwellen, insbesondere einen Ultraschallsender, umfassen, der vorzugsweise bei hohen Frequenzen einen Abstrahlwinkel zwischen 180° und 360° aufweist. Durch einen derartigen Sender ist es einerseits möglich, daß ein Anzeigeelement Daten an die Steuerung überträgt. Dieses kann einerseits von Bedingungen im Prozessor/Speicher des Anzeigeelementes selbst abhängen. Andererseits ist es aber auch möglich, daß das Anzeigeelement auf einen Datenempfang reagiert und beispielsweise einen Datenempfang an die Steuerung quittiert.

Darüber hinaus kann ein derartiger Sender auch einem Datenaustausch zwischen zwei Anzeigeelementen dienen. Abgesehen davon, daß hierdurch eine Kommunikation zwischen zwei Anzeigeelementen ermöglicht wird, ist es auch denkbar, daß durch ein Signal nicht angesprochene Anzeigeelemente dieses Signal weiterleiten. Hierdurch lassen sich größere Entfernungen zwischen einem einzelnen Anzeigeelement und einem mit der Recheneinheit verbundenen Sender/Empfänger für Longitudinalwellen überbrücken, so daß eine höhere Übertragungssicherheit bei niedrigen Abstrahlungsleistungen möglich ist. Hierzu können beispielsweise bekannte Protokolle genutzt werden, die einzelne Anzeigeelemente ansprechen.

Eine derartige vorgehensweise ist insbesondere bei Longitudinalwellenfrequenzen bzw. Ultraschallfrequenzen von über 25 kHz bzw. 30 kHz vorteilhaft.

Es versteht sich, daß ein derartiger Sender an einem Anzeigeelement bzw. ein unmittelbarer Datenaustausch zwischen den Anzeigeelementen und/oder ein Weiterleiten von empfangenden Daten auch unabhängig von den übrigen Merkmalen der beschriebenen Anordnungen vorteilhaft ist. Selbiges gilt für ein Quitieren eines Datenempfangs. Andererseits führen diese Maßnahmen kumulativ zu einer erheblichen Verbesserung dieser Anordnungen, insbesondere hinsichtlich der Zuverlässigkeit und einer Flexibiliät ihres Einsatzes.

Die Wahl verhältnismäßig hoher Frequenzen, auch unter Inkaufnahme ihrer ungünstigeren Abstrahlungseigenschaften, führt ebenfalls zu einer Erhöhung der Zuverlässigkeit, und zwar unabhängig von den übrigen Merkmalen der beschriebenen Anordnungen. Insbesondere können die Longitudinalwellen zumindest eine Trägerfrequenz und zumindest eine Signalfrequenz zur Datenübertragung umfassen, wobei die Signalfrequenz wesentlich niedriger als die Trägerfrequenz gewählt ist. Beispielsweise bei einer derartigen Verfahrensausgestaltung ist es möglich, empfängerseitig zumindest ein differenzielles Glied vorzusehen, welches die Signalfrequenzen von der bzw. den Trägerfrequenzen trennt. Die so übertragene Signalfrequenz ist wesentlich weniger mit Störungen behaftet, wodurch eine außerordentlich gute Datenübertragung gewährleistet werden kann. Hierbei versteht es sich, daß differenzielle Glied an jedem Empfänger, der in das System aus Steuerung und Anzeigeelemente über Longitudinalwellen eingebunden ist, auch unabhängig von den übrigen Merkmalen vorteilhaft zur Erhöhung der Zuverlässigkeit genutzt werden kann.

Es ist andererseits auch denkbar, die Trägerfrequenz niedriger als Signalfrequenz zu wählen.

Darüber hinaus kann die Steuerung einen tragbaren Kommunikator umfassen, der mit wenigstens einem Anzeigeelement Daten austauschen kann, wobei die Datenübertragung vorzugsweise über Longitudinalwellen, insbesondere Ultraschall, erfolgt. Hierdurch können manuelle Eingriffe in die Anzeige ermöglicht werden, wobei es denkbar ist, daß einem Kommunikator bzw. einem Nutzer eine entsprechende Priorität zugeordnet wird, die nur ein Ändern bzw. ein Austausch bestimmter Daten ermöglicht.

Der Kommunikator kann eine PC-Schnittstelle jeglicher Art aufweisen, so daß er unmittelbar mit der Steuerung, mit einer Recheneinheit oder einem sonstigen Computer Daten austauschen kann. Dieses ist beispielsweise für eine Inventur von Vorteil, da über den Kommunikator beispielsweise Artikelnummern und zugehörige Artikel einem Nutzer zur Verfügung gestellt werden und dieser lediglich eine entsprechende Zahl einzugeben braucht. Die in dem Kommunikator gesammelten Daten können dann über den Rechner ausgewertet werden.

Die PC-Schnittstelle kann ebenso über Longitudinalwellen ausgebildet sein, so daß der Kommunikator unmittelbar in das Netz aus Steuerung und Anzeigeelementen integriert ist. Andererseits ist es auch denkbar, daß der Datenaustausch derart erfolgt, daß der Kommunikator mit der Steuerung über eine gesonderte Schnittstelle, beispielsweise durch elektromagnetische Wellen, und die ohnehin vorhandene Möglichkeit einer Datenübertragung mittels Longitudinalwellen mit den Anzeigeelementen kommuniziert.

Ein derartiger Kommunikator ist auch unabhängig von den übrigen Merkmalen einer Steuerung bzw. der Anzeigeelemente vorteilhaft für einen gesicherten Datenaustausch mit der Steuerung und/oder einem Anzeigeelement zu nutzen, wenn hierbei die Datenübertragung über Longitudinalwellen, insbesondere Ultraschall, erfolgt.

Insbesondere wenn das Anzeigeelement einen Sender umfasst aber auch wenn es noch weitere Zusatzfunktionen erfüllen soll, benötigt das Anzeigeelement verhältnismäßig große Energiemengen. Zwar ist es denkbar, die Anzeigeelemente mit einer elektrischen, zentralen Energiequelle zu verbinden, jedoch geht dieses auf Kosten der Flexibilität ihres Einsatzes. Insofern kann das Anzeigeelement eine Energiequelle mit einem Energiespeicher, wie beispielsweise einer Batterie, einem Akku oder einem Kondensator, umfassen. Vorteilhafterweise wird in diesem Energiespeicher zumindest ein Teil der von dem Empfänger für Longitudinalwellen aufgenommenen Energie in dem Energiespeicher gespeichert. Insbesondere kann auch ein weiterer Empfänger für Longitudinalwellen vorgesehen sein, der Energie dem Energiespeicher zuführt. Hierdurch wird das Anzeigeelement weitgehend autark, da es ohnehin auf es treffende Energie der Longitudinalwellen entsprechend nutzt.

Dieses kann insbesondere dann vorteilhaft geschehen, wenn der Empfänger des Anzeigeelementes ein differenzielles Glied umfasst und sämtliche empfangenen Energieanteile, die nicht Bestandteil eines Signals sind, dem Energiespeicher zugeführt werden. Dieses ist insbesondere bei der Verwendung einer Träger- und einer Signalfrequenz, die in ihren Frequenzen sehr unterschiedlich sind, vorteilhaft.

Es versteht sich, daß eine derartige Sekundärverwendung auf das Anzeigeelement treffender Energie auch für sich gesehen und unabhängig von den übrigen Merkmalen des Anzeigeelementes und unabhängig von den Energieträgern vorteilhaft ist.

Je nach den dem Energiespeicher zur Verfügung gestellten Spannungen bzw. Stromstärken kann es vorteilhaft sein, wenn der Energiespeicher mindestens zwei Teilspeicher umfasst, die über Schaltelemente in Reihe und/oder parallel geschaltet werden können. Hierdurch können Energieaufnahme bzw. -abgabe des Energiespeicher jeweils optimal an herrschende Bedingungen angepasst werden. Insbesondere ist es möglich, durch Schaltelemente den Verbrauchern des Anzeigeelementes die Teilspeicher wahlweise in Reihe und/oder parallel bzw. einzeln zur Verfügung zu stellen.

Hierbei können die Schaltelemente je nach konkreter Ausgestaltung des Anzeigeelementes durch den Prozessor/Speicher, durch die Verbraucher bzw. die Energiequellen, die Empfänger oder Solarzellen angesteuert werden.

Durch eine derartige Aufteilung des Energiespeichers in mindestens zwei Teilspeicher läßt sich die Energienutzung auch unabhängig von den übrigen Merkmalen eines Anzeigeelementes vorteilhaft optimieren.

In konstruktiver Ausgestaltung kann das Anzeigeelement ein Piezo-Modul als Bestandteil eines Senders und/oder eines Empfängers aufweisen. Ein derartiges Piezo-Modul ist verhältnismäßig kostengünstig und in seiner Frequenz sehr genau auf die zu verwendenden Ultraschallfrequenzen einstellbar.

Darüber hinaus kann das Anzeigeelement auch ein normales Mikrofon sowie einen Lautsprecher umfassen. Diese können einer lokalen Dateneingabe bzw. Datenausgabe dienen. So kann beispielsweise ein Nutzer über das Mikrofon Informationen verbreiten, dieses kann einerseits als Dateneingabe zu der Steuerung für eine Verarbeitung weitergeleitet werden. Andererseits ist es aber auch denkbar, daß die Sprache lediglich weiter übertragen und an anderer Stelle bzw. einem anderen Anzeigeelement, gegebenenfalls nach einer Zwischenspeicherung, wieder ausgegeben wird.

Über Stimmerkennung oder ähnliche Autorisierungsverfahren kann gewährleistet werden, daß nur autorisierte Personen Daten bzw. Sprache an einem Anzeigeelement eingeben können.

Insofern kann das Anzeigeelement neben seiner reinen Anzeigefunktion auch noch weitere Aufgaben, insbesondere einem Weiterleiten bzw.

Empfangen jeglicher Form von Informationen bzw. Daten dienen. Neben den vorbeschriebenen Baugruppen kann das Anzeigeelement hierzu eine unmittelbar betätigbare Schnittstelle, wie eine Tastatur oder ähnliches, umfassen. Insbesondere können auch Solarzellen als Eingabeschnittstelle genutzt werden, indem einzelne Solarzellen, die mit entsprechenden Markierungen versehen sind, je nach Wahl des Nutzers entsprechend abgedunkelt werden.

Durch eine derartige Schnittstelle ist es beispielsweise denkbar, daß ein Anzeigeelement, welches beispielsweise für eine Platzreservierungsanzeige genutzt wird, eine gewünschte Tischreservierung in einem Zugrestaurant durch Tastendruck bzw. Betätigen der Schnittstelle entgegen nimmt und an die Steuerung bzw. ein weiteres Anzeigeelement an dem entsprechenden Tisch weiterleitet.

Es versteht sich, daß eine derartige unmittelbar betätigbare Schnittstelle an einem Anzeigeelement auch unabhängig von den übrigen Merkmalen des Anzeigeelementes, insbesondere unabhängig von der eigentlichen Anzeigefunktion, vorteilhaft genutzt werden kann. Auch hier ist lediglich eine Anwendung über Ultraschall bzw. Longitudinalwellen erfindungswesentlich.

In eben solcher Weise kann das Anzeigeelement mit einem zusätzlichen Empfänger und/oder Sender für elektromagnetische Wellen versehen sein. Dieses können beispielsweise Funkwellen aber auch Infrarot- oder UV-Wellen sein. Derartige Empfänger können ebenso wie der Empfänger für Longitudinalwellen mit einem Energiespeicher verbunden sein, so daß beispielsweise auch eine Solarzelle oder eine Antenne entsprechend genutzt werden kann, auch wenn sie als unmittelbar betätigbare Schnittstelle genutzt wird. Auf diese Weise läßt sich der Energiehaushalt des Anzeigeelements weiter verbessern.

Die Empfänger und/oder Sender für elektromagnetische Wellen erhöhen die Variabilität sowie die Bandbreite an Funktionen, die ein Anzeigeelement erfüllen kann. Es versteht sich, daß hierbei nicht sämtliche Anzeigeelemente eines Gesamtsystems identisch ausgebildet sein müssen. Die konkrete Ausstattung des Anzeigeelement richtet sich nach den an dieses Anzeigeelement gestellten Erfordernissen.

Insbesondere ist es möglich, die zusätzlichen Empfänger und/oder Sender für elektromagnetische Wellen verhältnismäßig schwach auszubilden, so daß diese für einen lokalen Datenaustausch genutzt werden können, wie nachfolgend detailliert beschrieben ist.

Die Erfindung schlägt als weitere Lösung für die oben stehende Aufgabe ein Registerelement zur Kennzeichnung eines Gegenstandes vor, welches zumindest einen Prozessor/Speicher sowie eine Antenne und/oder ein Piezo-Modul umfasst. Hierbei versteht es sich, daß als Piezo-Modul jegliche Baugruppe, die als Empfänger und/oder Sender für Longitudinalwellen, insbesondere Ultraschall, genutzt werden kann, dienen kann. Ein derartiges Registerelement erlaubt es auf eine externe Anregung hin, Registerdaten weiterzuleiten. Die hierfür erforderliche Energie kann das Registerelement aus der Antenne bzw. dem Piezo-Modul gewinnen.

Ein derartig einfach aufgebautes Registerelement ist sehr vielseitig zur Kennzeichnung von Gegenständen beispielsweise statt Lochkarten, Barcodes oder Preisauszeichnungen einsetzbar. Insbesondere kann ein derartiges Registerelement ohne Weiteres an dem zu kennzeichenden Gegenstand angebracht sein.

Je nach benötigtem Energiebedarf kann das Registerelement auch einen Energiespeicher umfassen, der von der Antenne und/oder dem Piezo-Modul aufgenommene Energie speichert und dem Prozessor/Speicher sowie der Antenne und/oder dem Piezo-Modul zur Verfügung stellt. Durch das Akkumulieren von Energie steht dem Registerelement mehr Energie zur Datenabgabe zur Verfügung.

Vorteilhafterweise ist das Registerelement unmittelbar an dem zu kennzeichnenden Gegenstand angebracht, so daß eine unmittelbare Zuordnung zwischen Registerelement und Gegenstand vorliegt.

Es ist somit möglich, die Lage eines Registerelementes und somit eines entsprechenden Gegenstandes in einem Bestand von Gegenständen, wie einem Lager, ohne Weiteres maschinell zu bestimmen. Dieses kann insbesondere mit den erfindungsgemäßen Anzeigeelementen geschehen, insoweit diese über eine entsprechende Zusatzeinrichtung verfügen. Dieses kann einerseits ein entsprechender Sender für Longitudinalwellen bzw. ein Ultraschallsender sein. Als besonders vorteilhaft erweist sich jedoch ein Empfänger und Sender für elektromagnetische Wellen, insbesondere wenn die Reichweite dieser Wellen derart begrenzt ist, daß unnötige Interferenzen ausgeschlossen werden können. So ist es möglich, daß ein Anzeigeelement unmittelbar in seiner Umgebung befindliche Gegenstände registriert und an eine Steuerung weiterleitet. Auf diese Weise ist eine nahezu automatische Inventur möglich, so daß ohne zusätzliches Personal ein ausreichender Bestand an Gegenständen gewährleistet ist.

Dementsprechend schlägt die Erfindung ein System zur Registrierung eines Bestandes an Gegenständen, wie beispielsweise eines Lagers, vor, bei welchem an jedem zu registrierenden Gegenstand ein entsprechendes Registerelement angebracht ist und eine Registratur über eine elektronische bzw. durch Longitudinalwellen wirksame Schnittstelle mit dem Prozessor/Speicher des Registerelements Daten austauschen kann. Auf diese Weise kann besonders einfach ein Lager bzw. ein Bestand an Gegenständen überwacht bzw. entsprechend registriert werden.

Insbesondere kann dieses einerseits durch die Vermittlung über die erfindungsgemäßen Anzeigeelemente geschehen. Andererseits ist es auch möglich, eine entsprechende Schnittstelle an einer Registratur, einer Kasse oder einem extra Erfassungselement vorzusehen, so daß der Lagerbestand an dieser Stelle verwaltet werden kann. Insbesondere wenn die Schnittstelle mit einer Kasse verbunden ist, ist es möglich, daß bei Entnahme von Waren aus einem Warenlager, wie beispielsweise einem Supermarkt, diese Gegenstände automatisch an der Kasse erfaßt werden. Ein Kunde braucht somit lediglich einen Einkaufswagen oder eine Einkaufstasche an der entsprechenden Schnittstelle vorbei zu führen und die Kasse kann die entsprechenden Waren erfassen, den Lagerbestand aktualisieren und einen Kaufpreis für die Waren ausgeben.

Durch diese Maßnahme reduziert sich auch ein Diebstahlrisiko, da mit einem erfindungsgemäßen Registerelement versehene Waren auch in Taschen bzw. am Körper erfaßt werden können.

Durch eine derartige Anordnung erfolgt darüber hinaus die Preisermittlung an der Kasse äußerst schnell und ohne den Einsatz von Personal. Dieses kann zu anderen Zwecken, insbesondere auch für eine Diebstahlsüberwachung, eingesetzt werden.

Das erfindungsgemäße Registerelement kann besonders im Zusammenspiel mit den weiteren Möglichkeiten des erfindungsgemäßen Anzeigeelementes einer Lagerüberwachung dienen. So kann das Anzeigeelement über Ultraschall oder eine sonstige Sensorik sowie in Verbindung mit den von dem Registerelement bereitgestellten Informationen ermitteln, wieviele mit dem Registerelement versehene Gegenstände dem entsprechenden Anzeigeelement zugeordnet sind. Auf diese Weise kann darauf verzichtet werden, jedem Gegenstand einer identischen Gegenstandsgruppe ein gesondertes Registerelement zuzuordnen.

Hiervon ausgehend ist es möglich, die erfindungsgemäßen Longitudinalwellen zur Ermittlung einer Raumstruktur zu nutzen. So kann über Ultraschall einerseits die unmittelbare Umgebung eines Anzeigeelementes erfaßt und somit beispielsweise die Zahl der in der Nähe des Anzeigeelementes angeordneten Waren bestimmt werden. Darüber hinaus können die Longitudinalwellen aber auch für eine Gesamtanalyse des entsprechenden Raumes genutzt werden, wobei Streukörper, wie Regale und Waren, entsprechend berücksichtigt werden, so daß ein Verrücken von Regalen bzw. beschädigte Produkte erkannt werden können.

Es ist insbesondere auch möglich zwei Frquenzen, bspw. 30 kHz und 30,5 kHz, zu verwenden. Die eine Frequenz kann hierbei zur Analayse der Raumstruktur dienen. Insbesondere kann durch diese das Rückstrahlverhalten des Raumes ermittelt werden. Die zweite Frequenz dient der Datenübertragung, wobei die Ergebnisse aus der Raumstrukturanalyse zum Ermitteln der übertragen Daten genutzt werden. Auf diese Weise kann der Einfluß von Echos reduziert bzw. ausgeschlossen werden.

Es ist andererseits auch möglich, daß der Prozessor/Speicher des Registerelements ein Speicherelement, welches Daten permanent, vorzugsweise in veränderlicher Weise, speichern kann, umfaßt. In einen derartigen Speicher können individuelle Daten, die einen einzelnen Gegenstand kennzeichnen, abgelegt werden. Dieses kann neben einer Produktnummer, die für alle Gegenstände bzw. Waren eines identischen Typusses gleich ist, auch eine individuelle Bestandsnummer sein, die in diesem Speicherelement abgelegt ist. Eine derartige Bestandsnummer wird vergeben, wenn ein entsprechender Gegenstand bzw. ein entsprechendes Registerelement im Bestand aufgenommen wird. Bei Verlassen des Bestandes wird diese Bestandsnummer entsprechend ausgetragen und kann anschließend neu vergeben werden. Auf diese Weise kann beispielsweise durch das Anzeigeelement individuell ermittelt werden, welche Gegenstände in seiner unmittelbaren Umgebung angeordnet sind, selbst wenn dieses Gegenstände eines identischen Typusses sind. Ebenso ist es bei einer Ausgangsregistrierung, wie beispielsweise an einer Kasse, möglich, ohne weiteres individuelle Gegenstände zu identifizieren, auch wenn diese identischen Typs sind.

Die Vergabe einer individuellen Bestandsnummer kann beispielsweise bei der Aufnahme in das Lager erfolgen. Andererseits ist es auch denkbar, daß diese Bestandsnummer jeweils durch ein erfindungsgemäßes Anzeigeelement vergeben wird, wenn die Ware bzw. deren Registerelement in dessen Umgebung gelangt.

Ebenso ist es denkbar, in dem Prozessor/Speicher eines erfindungsgemäßen Anzeigeelementes ein Speicherelement vorzusehen, welches permanent, vorzugsweise veränderbar, Daten abspeichern kann. Hierdurch lassen sich einerseits ohne weiteres verschiedene Anzeigeelemente individualisieren, indem bestimmte Daten entsprechend in dem Speicherelement abgelegt werden. Dieses kann einerseits durch eine feste Voreinstellung, wie bei ROMs und ähnlichem, geschehen. Vorteilhaft ist jedoch ein quasi permanentes Speicherelement, in welchem Daten individuell eingegeben werden können. Auf diese Weise ist eine nachträglich Individualisierung oder Umbenennung eines erfindungsgemäßen Anzeigeelements möglich.

Ebenso können in diesem Speicherelement auch weitere Daten abgelegt werden. Dieses können beispielsweise Artikelnummern und Bezeichnungen von zugehörigen Artikeln, bestimmte Preisstaffeln, ein Mehrwertsteuerfaktor, eine Sitzplatznummer, ein Satz Zieladressen oder ähnliches sein.

Durch eine derartige Voreinstellung ist es möglich, einen notwendigen Datenaustausch zwischen Anzeigeelement und dessen Steuerung zu minimieren. So kann beispielsweise durch ein einziges Steuersignal, welches sogar gleichzeitig an mehrere Anzeigeelemente gerichtet sein kann, ein bestimmter Rabatt oder ein neuer Mehrwertsteuersatz ausgegeben werden, wenn diese zuvor in dem erfindungsgemäßen Speicherelement hinterlegt sind.

Während bei bekannten Anzeigeelementen und deren Steuerung teilweise mehrere Stunden benötigt werden, um eine Preisänderung, wie beispielweise einen Rabatt oder eine prozentuale Preissenkung an alle Anzeigeelemente durchzugeben, ist dieses bei Verwendung eines erfindungsgemäßen Speicherelementes nicht der Fall, da die hierfür erforderliche Zahl der auszuführenden Operationen minimiert ist. Dieses trifft insbesondere dann zu, wenn für die Kommunikation zwischen Anzeigeelement und Steuerung komplexe Protokolle vorgesehen sind.

Auf diese Weise ist es möglich, daß auch kurzfristige Preissenkungen bzw. Preisanpassungen schnell vorgenommen werden. So ist es beispielsweise denkbar, daß verderbliche Ware ab einem bestimmten Zeitpunkt um einen bestimmten Prozentsatz im Preis gesenkt wird.

Insofern versteht es sich, daß ein derartiges Speicherelement, welches permanent Daten abspeichern kann, auch unabhängig von den übrigen Merkmalen eines Anzeigeelementes, eines Registerelementes bzw. einer Steuerung oder eines entsprechenden Systems vorteilhaft Anwendung finden kann. Insbesondere kann ein derartiges Speicherelement auch für Übertragungsverfahren, die auf andere Datenträger als Longitudinalwellen zurückgreifen, vorteilhaft Verwendung finden.

Während der vorgenannte Vorteil eines permanenten Speicherelementes einer Geschwindigkeitserhöhung bei einer Anzeigeveränderung dient, gewährleistet ein Speicherelement, welches Daten veränderbar permanent abspeichern kann, eine hohe Freiheit bei der Wahl der anzuzeigenden bzw. zu verarbeitenden Daten.

So können bei einer derartigen Anordnung zu Zeiten, zu denen hierfür genug Zeit vorhanden ist, ganze Datensätze in dem Speicherelement abgelegt werden, die dann nach Bedarf durch einzelne Befehle aufgerufen werden können. Auf diese Weise kann eine sehr hohe Individualität gewährleistet werden. Es versteht sich, daß ein derartiges, Daten veränderbar permanent abspeicherndes Speicherelement auch unabhängig von den übrigen des Prozessor/Speichers vorteilhaft ist. Insbesondere kann ein derartiges Speicherelement auch mit permanenten Speicherelementen sowie mit Daten lediglich kurzzeitig speichernden Speicherelementen kombiniert werden.

Vorzugsweise zeichnet sich ein permanent veränderbar Daten abspeicherndes Speicherelement dadurch aus, daß es Daten auch bei extrem geringen zur Verfügung stehenden Energiemengen bzw. bei totalem Energieausfall speichert.

Die Anzeige des Anzeigeelementes kann als farbige Folien-Print-LCD-Anzeige bzw. als anorganische oder organische Anzeige ausgebildet sein. Vorzugsweise handelt es sich um eine statische Anzeige, die mit einer Anzeigenansteuerung ausgestattet ist.

Die Anzeige kann dazu dienen, Ziffern, Grafiken, Bilder, Kodierungen, Effekte, dreidimensionale Bilder und Videos darzustellen. Insbesondere ist es auch denkbar, derartige Informationen in dem zuvor beschriebenen Speicherelement abzulegen.

Ebenso können, wenn das Anzeigeelement mit einem Lautsprecher versehen ist, entsprechende Sprachdateien angelegt sein. Diese können dann durch einen einzigen Befehl zur Ausgabe aufgerufen werden.

Darüber hinaus kann die Anzeige als Hintergrundbeleuchtung eine EL-Lichtquelle umfassen.

Es versteht sich, daß in dem Speicherelement auch Programme hinterlegt sind, die dem Prozessor/Speicher ein Ausführen bestimmter Verfahrensabläufe ermöglichen. Vorteilhafterweise sind zumindestens ein Teil dieser Programme in einem veränderbaren Speicherelement abgelegt, so daß diese auch im Nachhinein über Steuerung verändert werden können.

Eine Veränderung des Inhalts des Speicherelementes kann auch durch den oben beschriebenen Kommunikator vor Ort erfolgen.

Die oben beschriebenen Antennen sind vorzugsweise als Antennenspulen ausgebildet und können durch Aufdrucken realisiert sein.

Es versteht sich, daß eine Verwaltung der erfindungsgemäßen Anzeigeelemente durch die entsprechende Steuerung bzw. deren Recheneinheit gewährleistet sein kann. Insbesondere kann eine Benutzeroberfläche gewählt werden, die eine geeignete Angabe der Artikel bzw. Waren und der Platzierung ermöglicht. Insbesondere kann auch die eigentliche Zuordnung zwischen Anzeigeelement und den dahinter angeordneten Waren bzw. einem entsprechend angeordneten Sitzplatz oder ähnlichem über diese Benutzerschnittstelle geschehen, so daß das gesamte System von der Recheneinheit aus eingerichtet und gesteuert werden kann.

Ebenso ist es möglich, die von dem Anzeigeelement bereitgestellten Informationen einerseits in der Recheneinheit zentral zu verwalten. Andererseits kann auch das Anzeigeelement selbst die ihm zugeordneten Waren verwalten und beispielsweise lediglich eine Bestellanforderung oder eine Preisänderung an die Steuerung abgeben. Ebenso ist es möglich, Informationen wie Einräumanleitungen einen Soll-/Istbestand und ähnliches in dem Anzeigeelement zu speichern und zur Anzeige zu bringen. Diese Informationen können auch an einen Kommunikator weitergeleitet werden.

Eine Kommunikation zwischen dem Kommunikator und dem Anzeigeelement muß nicht zwingend über Longitudinalwellen erfolgen, vielmehr kann auch ein unmittelbarer oder mittelbarer Kontakt zwischen Anzeigeelement und Kommunikator hergestellt werden. Es ist beispielsweise auch denkbar, daß die Information über einen menschlichen Körper übertragen wird, der einerseits in Kontakt mit dem Kommunikator und andererseits in Kontakt mit dem Anzeigeelement, bzw. entsprechenden Sensoren an Anzeigeelement und Kommunikator, steht.

Das Anzeigeelement kann auch eine Tastatur bzw. Kontaktfläche, wie beispielsweise eine abdeckbare Solarzelle, aufweisen, durch welche ein Menü zur Eingabe von Daten gesteuert wird. Hierdurch können verschiedene Abfragefunktionen bzw. Eingabefunktionen, wie beispielsweise eine manuelle Bestellung oder eine Platzreservierung, ausgelöst werden. Für eine derartige Menüführung eignen sich insbesondere drei entsprechende Kontaktflächen, von denen eine einem Durchschalten durch das Menü und zwei weitere für Werteangaben, wie ja/nein oder hoch/runter, genutzt werden.

Die erfindungsgemäßen Anzeigeelemente können auch wesentlich größer als unbedingt für Supermärkte notwendig ausgebildet werden. Insbesondere können diese auch in der Werbung für Wegweiserinformationen und Lautsprecherdurchsagen genutzt werden.

Das vorliegende System kann beispielsweise für eine Platzzuweisung in Zügen, Flugzeugen, Bussen, Schiffen und ähnlichen Verkehrssystemen sowie im Theater, Schauspielhaus, Konzertsälen, Sportstätten oder bei ähnlichen Veranstaltungen dienen. Insbesondere können hier auch Reservierungen angezeigt werden. Ebenso ist eine entsprechende Ruffunktion, wie beispielsweise für einen Platzanweiser oder Schaffner sowie eine Reservierungsfunktion, beispielsweise für einen Tisch in einem Zugrestaurant über die Kontaktflächen bzw. andere geeignete Schnittstellen, wie auch Mikrofone, möglich.

Da die durch das erfindungsgemäße Anzeigeelement ausgestrahlten elektromagnetischen Energien, wenn überhaupt vorhanden, äußerst gering sind, eignet sich das erfindungsgemäße Anzeigeelement insbesondere für gegen elektromagnetische Wellen sensitive Bereiche, wie beispielsweise Krankenhäuser. So kann das System auch individuelle Krankendaten speichern und anzeigen sowie gleichzeitig einem Ruf oder einer vor-Ort-Kommunikation dienen.

Darüber hinaus kann die Gesamtanordnung, insbesondere über die Recheneinheit der Anzeigeelementsteuerung, mit anderen Rechnern verbunden sein. Hierzu können beispielsweise sämtliche bekannten Netzwerke, so auch das Internet, dienen.

Es versteht sich, daß eine erfindungsgemäße Anzeigeelementsteuerung auch transportabel ausgestaltet, beispielsweise in einer Registrierkasse angeordnet sein kann. So kann das erfindungsgemäße System auch autark, beispielsweise auch für Sonderveranstaltungen, eingesetzt werden. Eine derartige, autarke Registrierkasse kann beispielsweise über eine weitere Schnittstelle mit einem globalen Netz bzw. einem Zentralrechner oder einem weiteren erfindungsgemäßen System verbunden sein. Dieses kann z.B. über eine Telefonleitung, auch eine Funktelefonleitung, oder sonstige elektromagnetische Wellen geschehen.

Weitere Vorteile, Ziele und Eigenschaften vorliegender Erfindung werden anhand der Beschreibung anliegender Zeichnung erläutert, in welcher beispielhaft in:
- Figur 1: ein Anzeigeelement und
- Figur 2: ein System aus Anzeigeelementen, einer Anzeigeelementsteuerung, Registerelementen und einem Registriersystem
schematisch dargestellt sind.

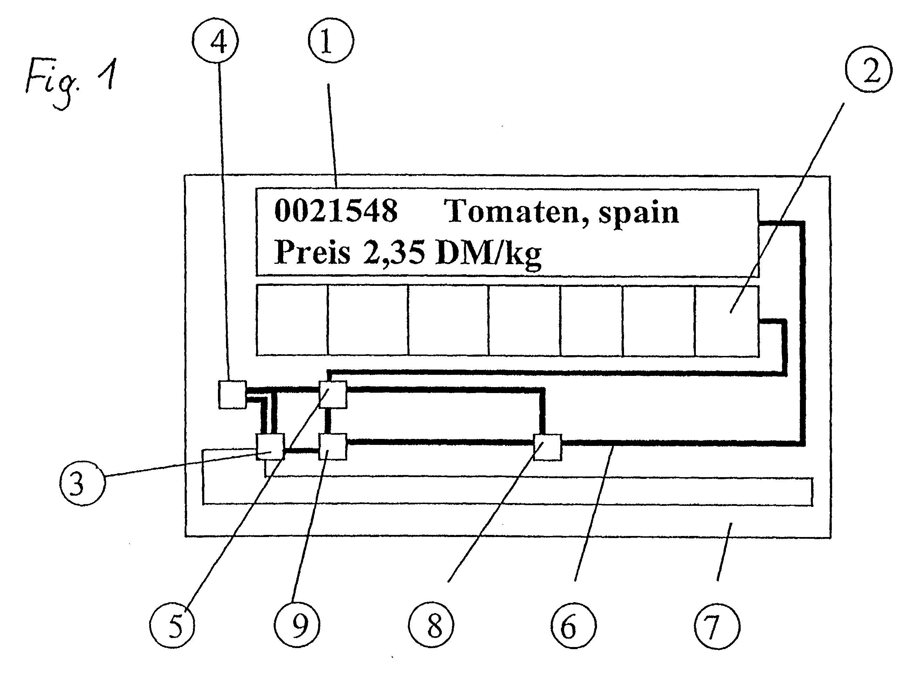

Das in Figur 1 dargestellte Anzeigeelement umfaßt eine Energiequelle 5 mit mehreren hochkapazitiven Kondensatoren sowie mit einer Energiesteuerung, die diese Kondensatoren wahlweise in Reihe oder parallel schalten kann, einen LCD-Display 1 als Anzeige und einen kontaktlosen Prozessor/Speicher 3. Der Prozessor/Speicher 3 ist einerseits mit einer aufgedruckten Schleife als Antenne sowie andererseits mit einem Ultraschallsender und -empfänger 4 verbunden.

Bei letzterem handelt es sich um ein Piezo-Modul, welches Ultraschall in einem Abstrahlwinkel von etwa 180° als Raumwinkel abstrahlen kann.

Sowohl der Prozessor/Speicher 3 als auch das Piezo-Modul 4 sind derart mit der Energiequelle 5 verbunden, daß überschüssige Energie, insbesondere die Energie von Trägerwellen, der Energiequelle 5 zugeführt werden können.

Die Energiequelle 5 ist darüber hinaus mit einem Solarzellensatz 2 verbunden, der aus mehreren einzelnen Solarzellen besteht. Durch Abdecken einzelner Solarzellen des Solarzellensatzes 2 können Informationen in den Speicher des Prozessors/Speichers 3 eingegeben werden. Der Solarzellensatz 2 dient somit als unmittelbar betätigbare Schnittstelle. Hierbei kann durch das Betätigen einzelner Solarzellen ein Menü in dem LCD-Display aufgerufen werden, so daß einzelne Speicherwerte gezielt verändert werden können.

Das Anzeigeelement umfaßt desweiteren einen Verstärker 9, der von dem Prozessor/Speicher 3 angesteuert und von der Energiequelle 5 mit Energie versorgt wird. Dieser Verstärker 9 dient der Ansteuerung eines LCD-Prozessors 8, welcher die Daten aus dem Prozessor/Speicher 3 in Steuersignale für das LCD-Display 1 umsetzt.

In Figur 1 ist mit der Ziffer 6 eine elektrische Schaltung schematisch dargestellt. Es versteht sich, daß diese Schaltung je nach Erfordernissen angepaßt ist.

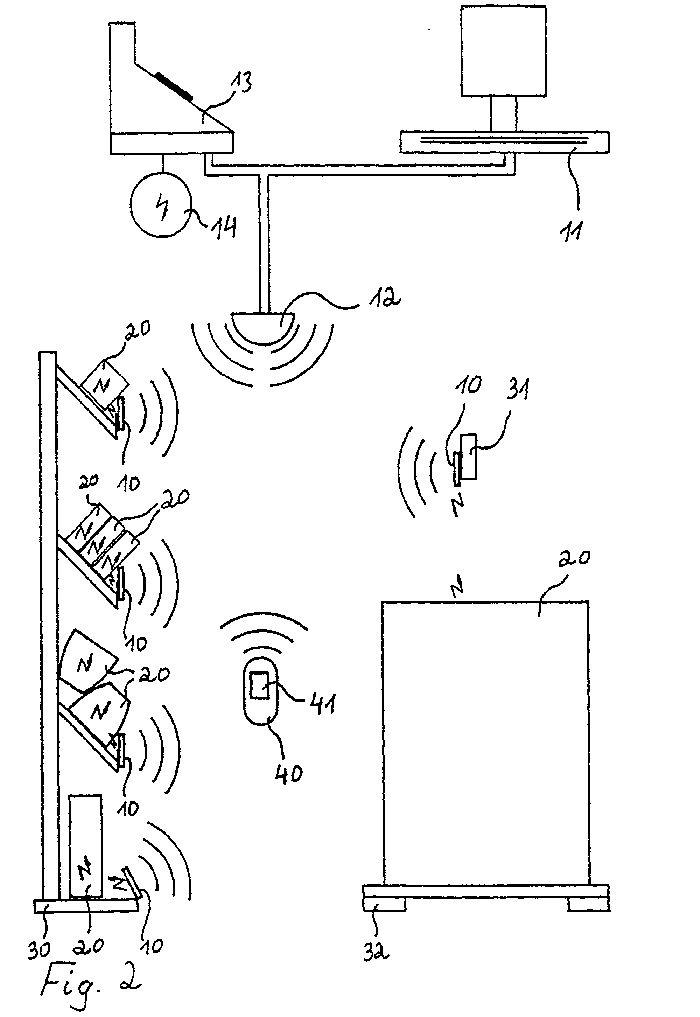

Mehrerer solcher Anzeigeelemente (in Figur 2 mit 10 beziffert) sind bei der Anordnung nach Figur 2 zu einem Gesamtsystem zusammengefaßt. Die Anzeigeelemente 10 kommunizieren mit einer einen Computer umfassenden Recheneinheit 11 einer Steuerung über einen Sender/Empfänger 12 für Ultraschall. Hierbei ist das Protokoll, welches der Kommunikation dient, derart ausgelegt, daß Anzeigeelemente 10, die nicht angesprochen werden, ein empfangenes Signal weiter senden. Auf diese Weise ist es möglich, den Sender/Empfänger 12 mit verhältnismäßig geringer Leistung zu betreiben, da ein ausgesendetes Signal, welches ein Anzeigeelement 10 erreicht, durch dieses an die weiteren Anzeigeelemente 10 weitergeleitet wird. Ebensolches gilt für Signale, die zurückübertragen werden. Auch ist es durch eine derartige Anordnung möglich, daß Anzeigeelemente 10 untereinander Daten austauschen.

Jeder Empfang von Daten wird durch entsprechende Anzeigeelement 10 bzw. die Recheneinheit 11 und den Sender/Empfänger 12 quittiert, so daß die Gefahr einer Fehlübertragung nahezu ausgeschlossen ist. Sämtliche Sendereinheiten dieses Systems senden Ultraschall mit einer verhältnismäßig hohen Trägerfrequenz und einer wesentlich geringeren Signalfrequenz aus. Jede Empfängereinheit dieses Systems umfaßt ein differenzielles Glied, welches die Signalfrequenz herausselektieren kann.

Desweiteren ist in diesem System jedes Anzeigeelement 10 mit einem veränderbaren Permanentspeicher versehen, der unter anderem wie folgt genutzt wird. Während der Nacht oder wenn das System gerade nicht sonstige Aufgaben erfüllen muß, werden - wenn nötig - in jedem Speicher eines Anzeigeelementes 10 Preise und anzuzeigende Werbetexte abgespeichert. Ebenso sind in diesem veränderbaren Permanentspeicher Artikelbezeichnungen sowie Artikelnamen abgelegt. Darüber hinaus umfaßt der Speicher eine eindeutige Identifikationsnummer für jedes Anzeigeelement, so daß dieses eindeutig angesprochen werden kann. Ebenso umfaßt der Speicher Informationen über gewisse Gruppenzugehörigkeiten. Aus diesem Datensatz können durch einfache Signale, insbesondere auch gruppenweise, bestimmte Daten aufgerufen werden. So kann durch einen einzigen Befehl für eine bestimmte Warengruppe ein Sonderrabatt angezeigt oder auf allen Anzeigeschildern eine bestimmte Werbeaussage als Fließtext angezeigt werden.

Darüber hinaus umfaßt das in Figur 2 dargestellte System auch eine Registratur von einzelnen Waren 20. Hierzu weist jeder Gegenstand 20 des Warenlagers ein Registerelement (angedeutet durch einen gezackten Pfeil) auf, welches einen Prozessor/Speicher sowie eine aufgedruckte Schleife als Antenne umfasst. Jedes Anzeigeelement 10 kann auf diese Weise mittels eines kurzreichweitigen elektromagnetischen Signals die unmittelbar in der Umgebung stehenden Waren erfassen. Auf diese Weise kann durch die Anzeigeelemente 10 der Lagerbestand in Regalen 30 und unter Haltebalken 31 bzw. auf Paletten 32 oder an sonstigen Orten bestimmt werden. Die jeweiligen in der Umgebung eines Anzeigeelementes 10 befindlichen Waren werden hierzu durch die Registerelemente in ihrer Art erfasst. Im Anschluß hieran ordnet das Anzeigeelement 10 jedem zu ihm gehörenden Gegenstand bzw. Registerelement eine bestimmte Lagernummer zu, die in dem Prozessor/Speicher des entsprechenden Elementes abgelegt wird. Bei Gegenständen, die in ihrer Art nicht zu dem entsprechenden Anzeigeelement 10 gehören, erfolgt eine Warnung. Der zu einem Anzeigeelement 10 gehörende Lagerstand wird in dem Anzeigeelement 10 abgespeichert und an die Steuerung weitergeleitet.

Auf diese Weise ist zu jedem Zeitpunkt das gesamte Lager detailliert erfasst.

Darüber hinaus umfasst das Registrierungssystem eine Kasse 13, die ebenfalls mit einem Sender/Empfänger 14 versehen ist.

Wird nun ein Gegenstand 20 bzw. eine Ware aus dem Lager entnommen, so wird dieses einerseits durch das Anzeigeelement 10 erkannt und eine entsprechende Vorabinformation an die Steuerung weitergeleitet. Beim Passieren der Kasse erfasst der Sender/Empfänger 14 automatisch die den Sender/Empfänger 14 passierenden Registerelemente und somit die entsprechenden Waren. Anhand dieser Informationen berechnet die Kasse einen zu entrichtenden Geldbetrag und aktualisiert letztendlich den Lagerbestand. Hierauf können durch die Steuerung, die mit der Kasse 13 über einen Bus 15 verbunden ist, entsprechende Bestellvorgänge eingeleitet werden.

Sollte ein Kunde eine Ware 20 entnommen jedoch an einer falschen Stelle abgelegt haben, so wird dieses durch das entsprechende Anzeigeelement 10 erkannt und kann über die Steuerung an einen Mitarbeiter weitergegeben werden.

Wie unmittelbar ersichtlich, können die Kasse 13 mit ihrem Sender/Empfänger 14 und dem Ultraschallsender/-empfänger 12 auch abgekoppelt und für Sonderveranstaltungen separat genutzt werden. Hierzu kann beispielsweise eine Fernverbindung, wie eine Datenleitung über ein Telefonnetz, eine Kommunikation mit der Recheneinheit 11 aufrechterhalten. Bei entsprechender Ausrüstung der Kasse 13 ist dieses jedoch nicht zwingend notwendig. Darüber hianus ist es möglich, die Recheneinheit 11 mit weiteren Recheneinheiten oder anderen Geräten zu vernetzen.

Ebenso kann ein tragbarer Kommunikator 40 vorgesehen sein, der mittels Ultraschall in dem Lager mit den Anzeigeelementen 10 bzw. über den Empfänger/Sender 12 mit der Steuerung als Schnittstelle zwischen einem Lagerarbeiter und dem in Figur 2 dargestellten System dient.

Der Kommunikator 40 mit einer Tastatur- und Anzeigeeinheit 41 dient als Kommunikationsmittel für den Lagerangestellten. Hierbei sind die Prioritäten derart gesetzt, daß von dem Kommunikator 40 ausgehend lediglich die Daten eines jeden Anzeigeelementes 10 abgefragt werden können. Darüber hinaus besteht die Möglichkeit, daß von dem Kommunikator 40 ausgehend Werbetexte gestartet sowie bestimmte Sonderrabatte bei einem Anzeigeelement zur Anzeige gebracht werden können, falls beschädigte Ware dort zu finden ist. Ein derart eingegebener Sonderrabatt wird auch an die zentrale Steuerung weitergeleitet.

## Patentansprüche

1. Anzeigeelement mit einer Energiequelle (5), mit einer Anzeige (1) und mit einem Prozessor/Speicher (3), wobei die Energiequelle (5) die Anzeige (1) und den Prozessor/Speicher (3) mit Energie versorgen und der Prozessor/Speicher (3) über die Anzeige (1) Daten anzeigen kann, wobei das Anzeigeelement einen Empfänger (4) für akustische Longitudinalwellen, der mit dem Prozessor/Speicher (3) verbunden ist, um empfangene Wellen als Daten dem Prozessor/Speicher (3) zuzuführen, umfasst und wobei die Energiequelle (5) einen Energiespeicher umfasst und zumindest ein Teil der von dem Empfänger (4) und/oder einem weiteren Empfänger aufgenommenen Energie in dem Energiespeicher (5) gespeichert wird, ***dadurch gekennzeichnet, dass*** der Energiespeicher mindestens zwei Teilspeicher umfasst, die über Schaltelemente den Verbrauchern des Anzeigeelementes in Reihe und/oder parallel zur Verfügung gestellt werden.

2. Anzeigeelement nach Anspruch 1, ***dadurch gekennzeichnet, dass*** der Empfänger (4) zumindest ein differenzielles Glied umfasst, welches die empfangenen Energieanteile, die nicht Bestandteil eines Signals sind, dem Energiespeicher zuführt.

3. Steuerung für ein oder mehrere Anzeigeelemente (10), nach einem der Ansprüche 1 oder 2, mit einer Recheneinheit (11) mit Mitteln zur Verwaltung und/oder Eingabe von anzuzeigenden Werten, welche Mittel (4, 12) zur Übertragung von Daten zwischen wenigstens einem Anzeigeelement (10) und der Recheneinheit (11) mittels akustischer Longitudinalwellen umfasst, ***dadurch gekennzeichnet, dass*** die Mittel (4, 12) empfängerseitig zumindest ein differenzielles Glied umfassen, welches die empfangenen Energieanteile, die nicht Bestandteil eines Signals sind, einem Energiespeicher zuführt.

4. Verfahren zum Steuern von einem oder mehreren Anzeigeelementen (10), nach einem der Ansprüche 1 oder 2 mittels einer Steuerung, vorzugsweise nach Ansprüch 3, wobei zwischen wenigstens einem Anzeigeelement (10) und der Steuerung ein Datenaustausch mittels akustischer Longitudinalwellen erfolgt, ***dadurch gekennzeichnet, dass*** die akustischen Longitudinalwellen zumindest eine Trägerfrequenz und zumindest eine Signalfrequenz zur Datenübertragung umfassen, wobei die Signalfrequenz wesentlich niedriger als die Trägerfrequenz ist.

5. Steuerungsverfahren nach Anspruch 4, ***dadurch gekennzeichnet*, *dass*** die akustischen Longitudinalwellen zur Ermittlung einer Raumstruktur genutzt werden.

## Claims

1. A display element having an energy source (5), a display (1), and a processor/memory (3), with the energy source (5) able to supply the display (1) and the processor/memory (3) with energy and the processor/memory (3) able to display data via the display (1), with the display element comprising a receiver (4) for acoustic longitudinal waves, which is connected with the processor/memory (3) in order to supply received waves to the processor/memory (3) as data, and with the energy source (5) comprising an energy store, and at least a part of the energy received by the receiver (4) and/or a further receiver stored in the energy store (5), **characterized in that** the energy store includes at least two partial stores which are made available to the consumer of the display element in series or in parallel via switching elements.

2. The display element according to claim 1, **characterized in that** the receiver (4) comprises at least one differential member which feeds the part of the energy received which is not part of the signal to the energy store.

3. A control for one or more display elements (10) according to one of the claims 1 or 2 having an arithmetic unit (11), with means for management and/or input of values to be displayed, which comprises means (4, 12) for transmission of data between at least one display element (10) and the arithmetic unit (11) by means of acoustic longitudinal waves, **characterized in that** the means (4, 12) comprises at least one differential member on the receiver side which feeds the portion of the energy received which is not a component of a signal to an energy store.

4. A process for the control of one or more display elements (10) according to one of the claims 1 or 2 by means of a control, preferably according to claim 3, with data exchange occurring by means of acoustic longitudinal waves between at least one display element (10) and the control, **characterized in that** the acoustic longitudinal waves comprise at least one carrier frequency and at least one signal frequency for data transmission, with the signal frequency significantly lower than the carrier frequency.

5. The control process according to claim 4, **characterized in that** the acoustic longitudinal waves are used to determine a spatial structure.

## Revendications

1. Elément d'affichage avec une source d'énergie (5), avec un panneau d'affichage (1) et un processeur/une mémoire (3), la source d'énergie (5) alimentant en énergie le panneau d'affichage (1) et le processeur/la mémoire (3) et le processeur/la mémoire (3) pouvant afficher des données grâce au panneau (1), l'élément d'affichage comportant un récepteur (4) d'ondes acoustiques longitudinales, qui est relié au processeur/à la mémoire (3), afin de transmettre les ondes reçues sous forme de données au processeur/à la mémoire (3) et la source d'énergie (5) comportant un accumulateur d'énergie et au moins une partie de l'énergie absorbée par le récepteur (4) et/ou un récepteur additionnel étant stockée dans l'accumulateur d'énergie (5), ***caractérisé en ce que*** l'accumulateur d'énergie englobe au moins deux accumulateurs partiels, qui sont mis à la disposition des utilisateurs de l'élément d'affichage en série et/ou parallèlement grâce à des éléments de connexion.

2. Elément d'affichage selon la revendication 1, ***caractérisé en ce que*** le récepteur (4) comporte au moins un circuit différentiel, qui transmet les éléments énergétiques reçus ne faisant pas partie d'un signal à l'accumulateur d'énergie.

3. Commande pour un ou plusieurs éléments d'affichage (10) selon une des revendications 1 ou 2, avec une unité numérique (11) comportant des moyens de gestion et de saisie de valeurs à afficher, ces moyens (4, 12) servant à la transmission de données entre au moins un élément d'affichage (10) et l'unité numérique (11) au moyen d'ondes acoustiques longitudinales, ***caractérisée en ce que*** ces moyens (4, 12) comportent au moins, du côté du récepteur, un circuit différentiel, qui transmet les éléments énergétiques reçus ne faisant pas partie d'un signal à un accumulateur d'énergie.

4. Procédé pour la commande d'un ou plusieurs éléments d'affichage (10) selon une des revendications 1 ou 2 grâce à une commande, correspondant de préférence à la revendication 3, alors qu'entre au moins un élément d'affichage (10) et la commande un échange de données a lieu au moyen d'ondes acoustiques longitudinales, ***caractérisé en ce que*** les ondes acoustiques longitudinales comportent au moins une fréquence porteuse et au moins une fréquence multiple pour la transmission des données, la fréquence multiple étant nettement inférieure à la fréquence porteuse.

5. Procédé de commande selon la revendication 4, ***caractérisé en ce que*** les ondes acoustiques longitudinales sont utilisées pour la détermination d'une structure spatiale.
